# EUROPÄISCHE PATENTSCHRIFT

(11) **EP 1 999 393 B1**
(45) Veröffentlichungstag und Bekanntmachung des Hinweises auf die Patenterteilung: **21.12.2011**
(21) Anmeldenummer: 07704170.5
(22) Anmeldetag: 26.01.2007
(51) Int. Cl.: F16D 65/14, F16D 55/227

(54) **KOMBINIERTE BETRIEBS- UND FESTSTELLBREMSEINRICHTUNG**
COMBINED SERVICE AND PARKING BRAKE DEVICE
DISPOSITIF DE FREIN DE SERVICE ET DE FREIN DE STATIONNEMENT COMBINE

(30) Priorität: 22.03.2006 DE 102006013167; 01.08.2006 DE 102006035707
(43) Veröffentlichungstag der Anmeldung: 10.12.2008
(73) Patentinhaber: Robert Bosch GmbH, 70442 Stuttgart (DE)
(72) Erfinder: ASCHOFF, Joerg, 77815 Buehl (DE); CHITTKA, Stefan, 71634 Ludwigsburg (DE); CARUSO, Corrado, I-70121 Bari (IT); TRISTANO, Nicola, I-75100 Matera (IT); GUDEHUS, Thorsten, 71634 Ludwigsburg (DE); SCHEFZIK, Monika, I-70050 Santo Spirito (IT); ONORATO, Francesco, I-75100 Matera (IT)
(86) Internationale Anmeldenummer: PCT/EP2007/050780
(87) Internationale Veröffentlichungsnummer: WO 2007/107398

(56) Entgegenhaltungen:
- EP-A- 0 866 236
- WO-A-89/10496
- DE-A1- 10 239 793
- DE-A1- 10 355 224
- DE-C1- 19 732 168

## Beschreibung

### Stand der Technik

Die vorliegende Erfindung betrifft eine kombinierte Betriebs- und Feststellbremseinrichtung für Fahrzeuge, wobei ein Antrieb der Feststellbremseinrichtung unmittelbar an der Bremseinheit angeordnet ist.

Kombinierte Betriebs- und Feststellbremseinrichtungen sind aus dem Stand der Technik in unterschiedlichen Ausgestaltungen bekannt. Eine derartige Bremseinrichtung umfasst beispielsweise eine hydraulische Betriebsbremse sowie eine mechanische Feststellbremse (Parkbremse). In jüngster Zeit werden die Feststellbremsen nicht mehr mechanisch über einen Seilzug betätigt, sondern z.B. mittels eines Elektromotors, welcher unmittelbar an der Bremseinheit (Radbremse) angeordnet ist. Der Elektromotor treibt beispielsweise eine Spindeleinrichtung an, welche die Rotationsbewegung in eine translatorische Bewegung umwandelt, wodurch die Feststellbremse aktivierbar ist. Bei der Anordnung derartiger Elektromotoren unmittelbar an der Radbremse treten jedoch Bauraumprobleme auf, da der Bauraum an der Radbremse sehr klein bemessen ist.

Beispielsweise offenbart die DE 102 39 793 A1 eine kombinierte Betriebs- und Feststellbremseinrichtung bei der eine Abtriebswelle eines Elektromotors der Feststellbremseinrichtung in einem rechten Winkel und mit unveränderlichem Vertikalabstand zu einer Radachse angeordnet ist bzw. verläuft. Im Falle der aus den Figuren 1 und 3 der gattungsbildenden EP 0 866 236 A1 bekannten Vorrichtungen ist ein Ende der Abtriebswelle eines Elektromotors von einer Radachse weg gerichtet. Beide Anordnungen der Elektromotoren wirken sich nachteilig auf den Bauraumbedarf der jeweiligen Feststellbremseinrichtung aus.

In der DE 197 32168 Ci wurde vorgeschlagen, einen Elektromotor zum Antrieb einer Feststellbremseinrichtung an der Radbremse seitlich neben dem Fahrzeugbremsgehäuse anzuordnen. Dabei verläuft eine Abtriebswelle des Elektromotors mit seitlichem Abstand parallel zu einer Achse der Spindel. Bei dieser Anordnung ist es jedoch nachteilig, dass notwendigerweise ein Bauraum seitlich der Radbremse vorhanden sein muss, um den Elektromotor dort anzuordnen. Dies wird insbesondere bei sog. Inboard-Pin-Sliding-Bremsen zum Problem, welche ein Führungssystem für den Schwimmsattel mit zwei neben dem Bremsgehäuse angeordneten parallelen Führungsbolzen aufweisen. Die in der

DE 197 32 168 C1 vorgeschlagene Anordnung des Elektromotors kollidiert mit der Anordnung der Führungsbolzen. Zusätzlich verdeckt der Elektromotor die Führungsbolzen, so dass ein Bremsbelagwechsel erschwert oder verhindert ist.

### Offenbarung der Erfindung

Die erfindungsgemäße kombinierte Betriebs- und Feststellbremseinrichtung für ein Fahrzeug mit den Merkmalen des Patentanspruchs 1 weist demgegenüber den Vorteil auf, dass die Feststellbremseinrichtung nur einen sehr kleinen Bauraum benötigt, so dass die Feststellbremseinrichtung problemlos unmittelbar an der Radbremse angeordnet werden kann. Insbesondere weist die erfindungsgemäße kombinierte Bremseinrichtung einen sehr kurzen axialen Bauraumbedarf in Achsrichtung des Fahrzeugs auf, so dass sie problemlos insbesondere auch an komplexen Hinterachsgeometrien eines Fahrzeugs eingebaut werden kann. Dies wird erfindungsgemäß dadurch erreicht, dass die Feststellbremseinrichtung als Antrieb einen Elektromotor mit einer Abtriebswelle und eine Spindeleinrichtung zur Betätigung eines Bremskolbens der Radbremse umfasst. Die Spindeleinrichtung umfasst eine Spindel, welche axial in gleicher Richtung wie der Bremskolben angeordnet ist, wobei sich die Spindeleinrichtung mit dem Bremskolben in Wirkverbindung befindet Die Spindelachse ist somit parallel zu einer Radachse des Fahrzeugs angeordnet. Dadurch wird eine symmetrische Belastung des Bremsbelags bei betätigter Feststellbremse erreicht, wodurch die Gefahr eines ungleichen Belagverschleißes verhindert werden kann. Ferner ist die Abtriebswelle des Elektromotors senkrecht zur Spindelachse der Spindeleinrichtung angeordnet, wobei die Abtriebswelle des Elektromotors auf einer Geraden in Radialrichtung senkrecht zur Radachse des Rades durch die Radachse hindurch angeordnet ist. Alternativ ist die Abtriebswelle auf einer Parallelen zu einer Gerade durch die Radachse des Rades angeordnet. Ein Abstand der Parallelen zur Geraden liegt dabei vorzugsweise zwischen 1 mm bis 20 mm. Zudem ist die Abtriebswelle des Elektromotors in Richtung der Radmitte des Rades gerichtet. Dadurch ist der Elektromotor radial außen angeordnet.

Die Unteransprüche zeigen bevorzugte Weiterbildungen der Erfindung.

Besonders bevorzugt ist die Abtriebswelle des Elektromotors dabei in der Vertikalen durch die Radachse angeordnet, um einen möglichst symmetrischen Aufbau und eine symmetrische Krafteinleitung zu ermöglichen. Alternativ kann die Abtriebswelle auch in einem Winkel von ca. ± 20°, vorzugsweise ± 10°, um die Vertikale, in Radialrichtung des Rades angeordnet sein.

Bevorzugt ist zwischen der Abtriebswelle des Elektromotors und einer Spindel der Spindeleinrichtung ein Getriebe angeordnet. Das Getriebe umfasst vorzugsweise ein Schneckengetriebe und/oder ein Stirnradgetriebe. Hierdurch können in geeigneter Weise Drehzahl und Drehmoment des Elektromotors angepasst werden.

Gemäß einer bevorzugten Ausgestaltung der Erfindung umfasst die Abtriebswelle eine Schnecke, welche mit einem Schneckenrad kämmt. Auf einer gemeinsamen Welle mit dem Schneckenrad ist ferner ein erstes Stirnzahnrad angeordnet, welches mit einem zweiten Stirnzahnrad kämmt. Das zweite Stirnzahnrad ist auf einer gemeinsamen Achse mit der Spindel angeordnet, wodurch sich das zweite Stirnzahnrad und die Spindel gemeinsam drehen. Alternativ können das zweite Stirnrad und die Spindel als separate Bauteile vorgesehen werden, welche mittels einer formschlüssigen Kupplung verbunden sind. Somit umfasst das Getriebe zwischen Abtriebswelle und Spindel zuerst ein Schneckengetriebe und dann ein Stirnradgetriebe. Dadurch ist das Schneckengetriebe im Hochdrehzahlbereich des Getriebes angeordnet, wodurch nur eine geringe Geräuschentwicklung auftritt.

Gemäß einer alternativen Ausgestaltung der Erfindung ist an der Abtriebswelle des Elektromotors ein erstes Stirnzahnrad angeordnet, welches mit einem zweiten Stirnzahnrad kämmt. Das zweite Stirnzahnrad ist auf einer gemeinsamen Achse mit einer Schnecke angeordnet, wobei die Schnecke mit einem Schneckenrad kämmt, das auf einer gemeinsamen Achse mit der Spindel angeordnet ist und die Spindel antreibt. Somit ist gemäß dieser alternativen Ausgestaltung der Erfindung zwischen der Abtriebswelle und der Spindel zuerst ein Stirnradgetriebe und anschließend ein Schneckengetriebe angeordnet.

Vorzugsweise ist an der Abtriebswelle des Elektromotors ein Sensor zur Erfassung einer Rotation der Abtriebswelle angeordnet. Der Sensor ist vorzugsweise ein Hallsensor, wobei ein Hallsensor-Magnetrad am Ende der Abtriebswelle angeordnet ist und ein Hallsensor-Chip an einem Gehäuse des Getriebes angeordnet ist. Durch diese Anordnung eines Hallsensors kann auf einfache Weise die Position der Feststellbremse bestimmt werden. Alternativ ist der Hallsensor zwischen dem Elektromotor und einem Getriebezahnrad angeordnet.

Besonders bevorzugt sind der Elektromotor und das Getriebe als Baueinheit ausgebildet, welche im voraus zusammengebaut werden kann, wobei die Baueinheit mittels einer Kupplung, insbesondere einer formschlüssigen Kupplung, an der Spindel fixierbar und lösbar ist. Dadurch kann eine Motor-Getriebe-Einheit im voraus vormontiert werden und auf einfache Weise an der Spindel befestigt werden.

Weiter bevorzugt ist ein elektrischer Anschluss für den Elektromotor seitlich neben dem Elektromotor angeordnet. Der elektrische Anschluss stellt weiter bevorzugt auch eine Verbindung zwischen einem Sensor und einer Steuereinrichtung bereit.

Besonders bevorzugt ist die Motor-Getriebe-Einheit der Feststellbremse zwischen einem ersten Führungsbolzen und einem zweiten Führungsbolzen einer Schwimmsattel-Radbremse angeordnet. Hierdurch liegen die beiden Führungsbolzen der Radbremse frei, so dass ein Austausch der Bremsbeläge ohne Demontage der Motor-Getriebe-Einheit für die Feststellbremse notwendig ist.

Gemäß einer weiteren bevorzugten Ausgestaltung der Erfindung ist die Spindeleinrichtung mit einem selbsthemmenden Gewinde und/oder das Getriebe selbsthemmend ausgebildet. Dadurch kann auf eine zusätzliche mechanische Verriegelung verzichtet werden.

Gemäß einem weiteren Aspekt der vorliegenden Erfindung wird eine kombinierte Betriebs- und Feststellbremseinrichtung bereitgestellt, welche einen verbesserten Schutz gegen Beschädigungen der Feststellbremseinrichtung aufweist. Dies wird erfindungsgemäß dadurch erreicht, dass eine Hüllkurve der Feststellbremseinrichtung auf oder innerhalb einer Hüllkurve der Radbremse liegt. Mit anderen Worten weist die Hüllkurve der Feststellbremseinrichtung einen Punkt auf, welcher senkrecht zu einer horizontalen Ebene durch die Radachse einen maximalen senkrechten Abstand zur Ebene aufweist, der gleich oder kleiner ist als ein maximaler, senkrechter Abstand eines Punktes der Hüllkurve der Radbremse zur Ebene. Somit ist sichergestellt, dass keine Teile der Feststellbremseinrichtung über einen äußersten Punkt der Radbremse vorstehen. Dadurch wird eine Gefahr reduziert, dass die Feststellbremseinrichtung aufgrund von aufgewirbelten Steinen o.Ä. beschädigt wird. Insbesondere bei Fahrten über Schotterstrecken mit mittelgroßen Schottersteinen kann es vorkommen, dass einzelne Steine aufgewirbelt werden. Aufgrund der Rotation des Rades können diese Schottersteine ebenfalls in einem Radius aufgewirbelt werden und könnten gegen die Feststellbremseinrichtung geschleudert werden, wenn diese insbesondere, ausgehend von der Radachse, radial nach außen über den Bremssattel vorsteht. Insbesondere auch im Winter besteht eine Gefahr, dass sich Eis an der Felge bildet, z.B. beim Parken in einer Pfütze, welche über Nacht zufriert, oder dass bei einem stehenden Fahrzeug Eisstücke an der Felge festfrieren, welche sich dann während des Fahrens plötzlich lösen und gegen die Feststellbremseinrichtung schlagen können. Gemäß diesem Aspekt der Erfindung ist die Feststellbremseinrichtung somit radial innen durch die Radachse geschützt und radial nach außen bzw. seitlich nicht über die Hüllkurve der Radbremse vorstehend, so dass eine geringe Gefahr einer Beschädigung durch aufgewirbelte Teile besteht.

Besonders bevorzugt ist die Feststellbremseinrichtung derart angeordnet, dass sie um die Spindelachse der Spindel, ausgehend von einer Position, in welcher die Abtriebswelle des Elektromotors der Feststellbremseinrichtung senkrecht zu der horizontalen Ebene durch die Radachse angeordnet ist, und um einen Winkel α von ca. 90° bis ca. 270° im Uhrzeigersinn gedreht ist. Hierdurch ist sichergestellt, dass insbesondere der Elektromotor nicht über den Hüllkurve der Radbremse vorsteht. Besonders bevorzugt sind dabei Positionen, in welchen die Feststellbremseinrichtung um ca. 90° oder um ca. 180° oder um ca. 270° im Uhrzeigersinn gedreht ist. Insbesondere die um ca. 180° gedrehte Position stellt sicher, dass eine möglichst gleichmäßige Gewichtsverteilung der Feststellbremseinrichtung an der Radbremse vorhanden ist. Auch liegt ein gemeinsamer Schwerpunkt der Feststellbremseinrichtung dabei möglichst nahe an der Radachse.

Weiter bevorzugt ist die Feststellbremseinrichtung derart innerhalb der Hüllkurve in der Radbremse angeordnet, dass die Achsen vom Führungsbolzen der Radbremse nicht durch die Feststelleinrichtung überdeckt sind. Dadurch kann insbesondere eine einfache Handhabbarkeit der kombinierten Betriebs- und Feststellbremseinrichtung, z.B. beim Belagwechsel, sichergestellt werden, da immer ein freier Zugang zu den Führungsbolzen gewährleistet ist.

### Kurze Beschreibung der Zeichnungen

Nachfolgend wird die vorliegende Erfindung anhand von bevorzugten Ausführungsbeispielen in Begleitung mit den Zeichnungen beschrieben. In der Zeichnung ist:
- Figur 1: eine schematische, perspektivische Ansicht einer kombinierten Betriebs- und Feststellbremseinrichtung gemäß einem ersten Ausführungsbeispiel der Erfindung,
- Figur 2: eine Seitenansicht der in Figur 1 gezeigten Bremseinrichtung,
- Figur 3: eine Draufsicht der in den Figuren 1 und 2 gezeigten Bremseinrichtung,
- Figur 4: eine zweite Seitenansicht der in den Figuren 1 bis 3 gezeigten Bremseinrichtung aus Sicht der Fahrzeugachse,
- Figur 5: eine perspektivische Ansicht der Bremseinrichtung des ersten Ausführungsbeispiels aus einer Perspektive von unten, mit einem teilweise im Schnitt dargestellten Zahnrad,
- Figur 6: eine perspektivische Ansicht der Hauptbauteile der Feststellbremseinrichtung,
- Figur 7: eine schematische, perspektivische Ansicht der Hauptbauteile einer kombinierten Betriebs- und Feststellbremseinrichtung gemäß einem zweiten Ausführungsbeispiel der Erfindung,
- Figur 8: eine Seitenansicht einer kombinierten Betriebs- und Feststellbremseinrichtung gemäß einem nicht zur Erfindung zählenden Ausführungsbeispiel,
- Figur 9: eine Seitenansicht einer kombinierten Betriebs- und Feststellbremseinrichtung gemäß einem zweiten nicht zur Erfindung zählenden Ausführungsbeispiel, und
- Figur 10: eine Seitenansicht einer kombinierten Betriebs- und Feststellbremseinrichtung gemäß einem weiteren nicht zur Erfindung zählenden Ausführungsbeispiel.

### Ausführungsformen der Erfindung

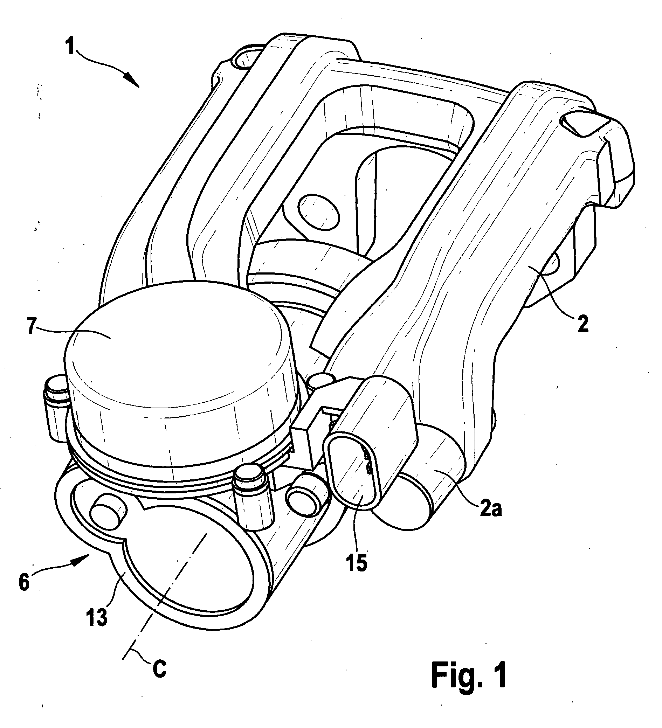

Nachfolgend wird unter Bezugnahme auf die Figuren 1 bis 6 eine kombinierte Betriebs- und Feststellbremseinrichtung 1 gemäß einem ersten Ausführungsbeispiel der Erfindung beschrieben.

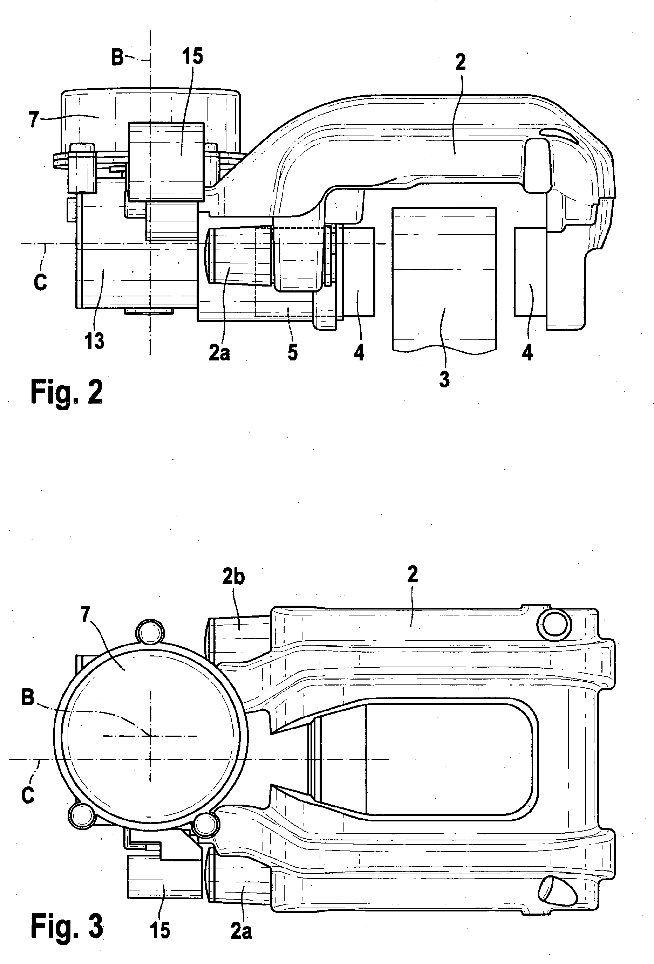

Wie in Figur 1 gezeigt, umfasst die kombinierte Betriebs- und Feststellbremseinrichtung 1 einen Bremssattel 2 und eine unmittelbar am Bremssattel 2 angeordnete Feststellbremseinrichtung 6. Die Feststellbremseinrichtung 6 ist dabei zur Innenseite des Fahrzeugs gerichtet angeordnet. Wie insbesondere aus Figur 2 ersichtlich ist, ist der Bremssattel 2 in bekannter Weise über einer Bremsscheibe 3 angeordnet und umfasst zu beiden Seiten der Bremsscheibe 3 jeweils einen Bremsbelag 4. Die Bremsbeläge 4 können in bekannter Weise über eine Hydraulik und einen in Figur 2 schematisch dargestellten Bremskolben 5 an die Bremsscheibe 3 für eine Betriebsbremsung des Fahrzeugs durch Aufbau eines Hydraulikdrucks angelegt werden.

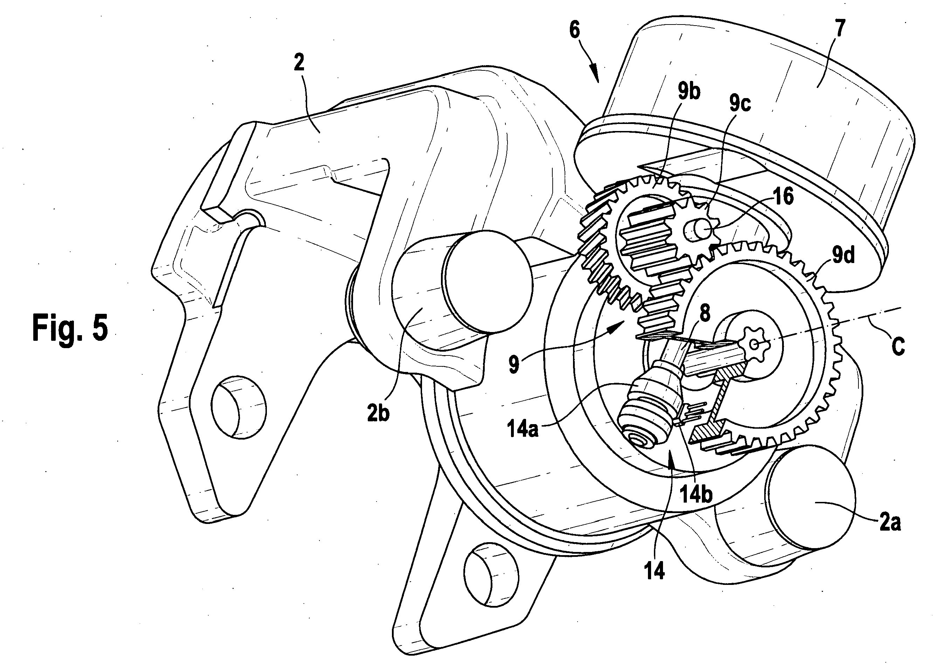

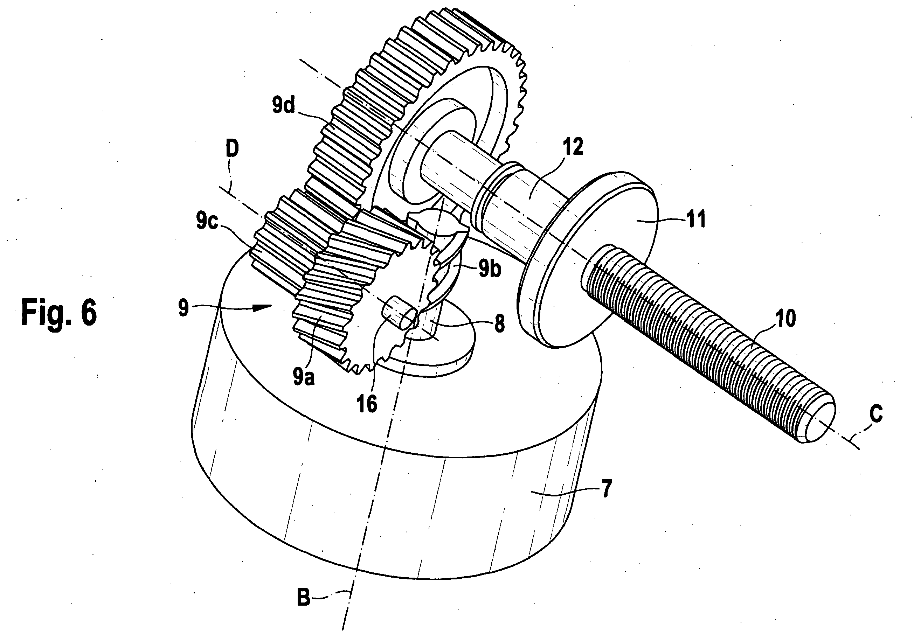

Die Feststellbremseinrichtung 6 ist, wie in Figur 2 gezeigt, seitlich des Bremssattels 2 angeordnet und weist eine Höhe ähnlich der Gesamthöhe des Bremssattels 2 auf. Die Feststellbremseinrichtung 6 umfasst einen Elektromotor 7, welcher eine Abtriebswelle 8 antreibt. Ferner umfasst die Feststellbremseinrichtung 6 eine Spindeleinrichtung mit einer Spindel 10 und einer Mutter, wobei die Mutter bei Rotation der Spindel den Bremskolben 5 betätigen kann bzw. eine Position des Bremskolbens 5 verriegeln kann. Das Gewinde der Spindeleinrichtung ist dabei selbsthemmend ausgebildet. Zwischen der Spindel 10 und der Abtriebswelle 8 ist ferner ein Getriebe 9 angeordnet. Das Getriebe 9 ist im Detail in den Figuren 5 und 6 dargestellt. Das Getriebe 9 umfasst dabei ein Schneckengetriebe und ein nachgeschaltetes Stirnradgetriebe. Genauer umfasst das Getriebe 9 eine Schnecke 9a, welche auf der Abtriebswelle 8 des Elektromotors angeordnet ist und mit einem Schneckenrad 9b... kämmt. Das Schneckenrad 9b ist auf einer Welle 16 angeordnet, auf welcher auch ein erstes Stirnzahnrad 9c angeordnet ist. Das erste Stirnzahnrad 9c kämmt mit einem zweiten Stirnzahnrad 9d, welches auf einer Verbindungswelle 12 angeordnet ist. Die Verbindungswelle 12 ist über eine formschlüssige Kupplung 12a mit der Spindel 10 der Spindeleinrichtung verbunden. Wenn der Elektromotor 7 dreht, wird das erzeugte Drehmoment über das Schneckengetriebe und das Stirnradgetriebe auf die Verbindungswelle 12 und über die Kupplung 12a auf die Spindel 10 übertragen. Dadurch kann die Mutter der Spindeleinrichtung in Richtung der Spindelachse C translatorisch bewegt werden. Wie insbesondere aus Figur 6 ersichtlich ist, ist dabei eine Getriebeachse D der Welle 16 parallel zur Spindelachse C angeordnet. Das Bezugszeichen 11 kennzeichnet ferner ein Axiallager.

Ferner umfasst die Feststellbremseinrichtung 6 eine Steckeraufnahme 15 mit elektrischen Kontakten zur Stromversorgung des Elektromotors 7 sowie zur Herstellung eines elektrischen Kontakts zwischen einem Sensor 14 und einer nicht dargestellten Steuereinrichtung. Der Sensor 14 ist im Detail aus Figur 5 ersichtlich und ist als Hallsensor ausgebildet. Dabei ist auf dem Ende der Abtriebswelle 8 ein Hallsensor-Magnetrad 14a angeordnet, welches sich gemeinsam mit der Abtriebswelle 8 dreht. In einem Getriebegehäuse 13, in welchem das Getriebe 9 angeordnet ist, ist ein Hallsensor-Chip 14b angeordnet, welcher über die Steckeraufnahme 15 mit der Steuereinrichtung verbunden ist. Die Steuereinrichtung erfasst somit die Rotation der Abtriebswelle 8 und wertet ferner Informationen hinsichtlich des Stroms und der Spannung des Elektromotors 7 aus, um anhand dieser Informationen eine zurückgelegte Wegstrecke der Mutter und eine eingestellte Kraft für die Feststellung der Feststellbremse zu bestimmen.

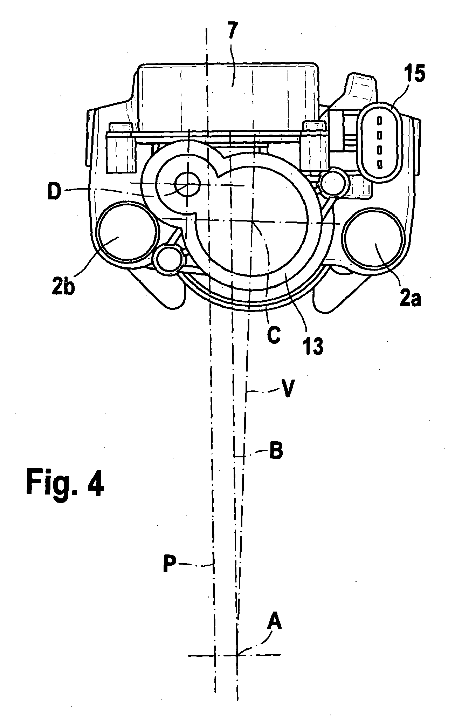

Wie insbesondere aus den Figuren 4 und 5 ersichtlich ist, weist die Feststellbremseinrichtung 6 einen sehr kompakten Aufbau auf, welcher nur einen geringen Platzbedarf benötigt. Dadurch ist es möglich, die Feststellbremseinrichtung 6 unmittelbar am Bremssattel 2 anzuordnen. Dabei liegen die Sattelführungsbolzen 2a, 2b des Bremssattels frei, wodurch ein problemloser Wechsel von abgenützten Bremsbelägen 4 möglich ist. Die Feststellbremseinrichtung ist somit zwischen den Sattelführungsbolzen 2a, 2b angeordnet (vgl. Figur 4). Wie in Figur 4 gezeigt, ist eine Achse B der Abtriebswelle 8 senkrecht zu einer Radachse A des Rades angeordnet. Die Achse B der Abtriebswelle ist dabei radial zur Radachse A angeordnet und geht durch die Radachse A hindurch. Ferner ist die Spindelachse C parallel zur Radachse A angeordnet. Die Spindelachse C liegt dabei auf einer Vertikalen V durch die Radachse A. Somit weist die erfindungsgemäße Bremseinrichtung insbesondere in axialer Richtung der Radachse in Richtung des Fahrzeuginneren eine sehr kurze Bauhöhe auf (vgl. Figuren 2 und 3). Dadurch kann die erfindungsgemäße Bremseinrichtung insbesondere an modernen Hinterachsgeometrien angeordnet werden. Als alternative Möglichkeit der Anordnung der Abtriebswelle des Elektromotors ist in Figur 4 noch eine Parallele P eingezeichnet, welche zur Achse B parallel ist. Auch mittels dieser alternativen Anordnung werden die erfindungsgemäßen Vorteile erreicht, wobei der Abstand zwischen der Parallelen P und der Achse B vorzugsweise maximal 20 mm ist.

Ferner weist die erfindungsgemäße Feststellbremseinrichtung 6 ein sehr geringes Geräusch auf, wobei insbesondere zur Betätigung der Feststellbremse es nicht notwendig ist, einen Hydraulikdruck am Bremskolben aufzubauen. Dadurch kann auf eine Betätigung der Hydraulikpumpen des Betriebsbremssystems verzichtet werden. Dadurch ist die Feststellbremse sehr leise. Alternativ kann die Feststellbremse auch derart betrieben werden, dass zuerst ein Druckaufbau, z.B. aus einem Druckspeicher, am Bremskolben erfolgt, um die Bremsbeläge 4 an die Bremsscheibe 3 anzulegen und anschließend die Feststellbremsposition mittels der Feststellbremseinrichtung 6 durch Betätigung des Elektromotors 7 mechanisch verriegelt wird. Anschließend kann der Druck am Bremszylinder wieder abgebaut werden, da die Feststellbremse durch das selbsthemmende Getriebe der Spindeleinrichtung mechanisch fixiert ist. Ferner sei angemerkt, dass statt des selbsthemmenden Getriebes auch eine separate Verriegelungseinrichtung vorgesehen sein kann.

Die erfindungsgemäße Feststellbremseinrichtung hat ferner den Vorteil, dass sie mit einer Vielzahl von unterschiedlichen Schwimmsattelbremsen, insbesondere Inboard-Pin-Sliding-Bremsen, Zero-Offset-Bremsen oder Reverse-Pin-Guided-Bremsen, verwendet werden kann. Ferner weist die erfindungsgemäße Feststellbremse für die linke und rechte Bremse einen hohen Gleichteile-Anteil auf, wobei für die linke bzw. rechte Bremse jeweils nur ein anderes Getriebegehäuse 13 notwendig ist. Durch die Fixierung der Feststellbremseinrichtung 6 über die Kupplung 12a an der Spindel 10 wird ferner eine separat montierbare und prüfbare bzw. austauschbare Baugruppe (Motor, Getriebe) erhalten.

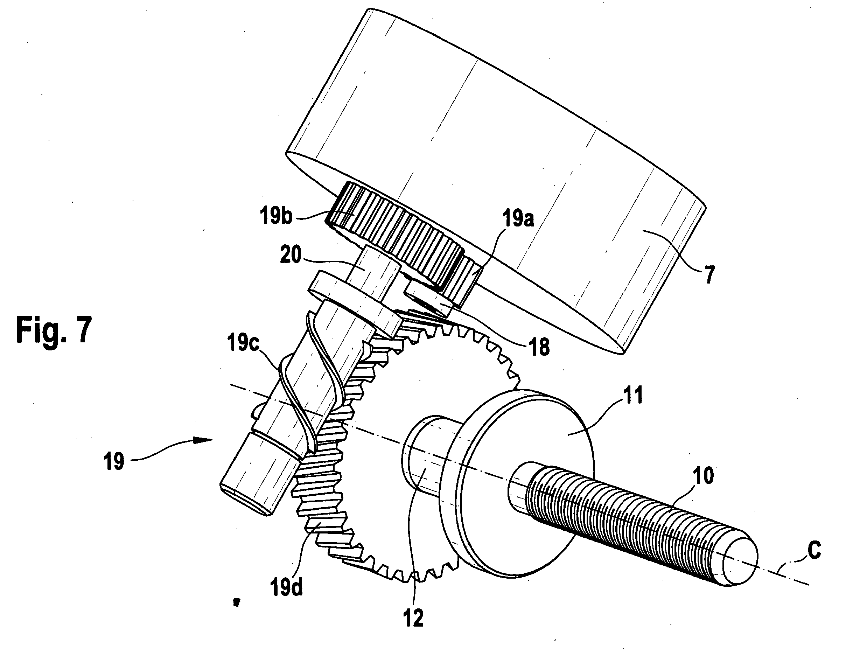

Nachfolgend wird unter Bezugnahme auf Figur 7 eine kombinierte Betriebs- und Feststellbremseinrichtung gemäß einem zweiten Ausführungsbeispiel der Erfindung beschrieben, wobei gleiche bzw. funktional gleiche Teile mit den gleichen Bezugszeichen wie im ersten Ausführungsbeispiel bezeichnet sind.

Die Bremseinrichtung gemäß dem zweiten Ausführungsbeispiel entspricht im Wesentlichen dem ersten Ausführungsbeispiel, wobei im Unterschied zum ersten Ausführungsbeispiel das Getriebe 9 der Feststellbremseinrichtung 6 unterschiedlich aufgebaut ist. Im Unterschied zum Getriebe des ersten Ausführungsbeispiels ist das Getriebe des zweiten Ausführungsbeispiels derart aufgebaut, dass nach der Abtriebswelle 18 erst ein Stirnradgetriebe und anschließend ein Schneckengetriebe angeordnet ist. Wie aus Figur 7 ersichtlich ist, ist auf der Abtriebswelle 18 ein erstes Stirnrad 19a angeordnet, welches mit einem zweiten Stirnrad 19b kämmt. Das zweite Stirnrad 19b ist auf einer Welle 20 angeordnet, auf welcher auch eine Schnecke 19c angeordnet ist. Die Schnecke 19c kämmt mit einem Schneckenrad 19d, welches auf einer Verbindungswelle 12 angeordnet ist. Die Verbindungswelle 12 ist über eine Kupplung 12a wieder mit der Spindel 10 verbunden und überträgt das durch den Elektromotor 7 erzeugte Drehmoment auf die Spindel 10. Diese Anordnung hat den Vorteil, dass sie noch platzsparender und kompakter ist, da das Schneckenrad 19d auf der Spindelachse C angeordnet ist. Ansonsten entspricht dieses Ausführungsbeispiel dem ersten Ausführungsbeispiel, so dass auf die dort gegebene Beschreibung verwiesen werden kann.

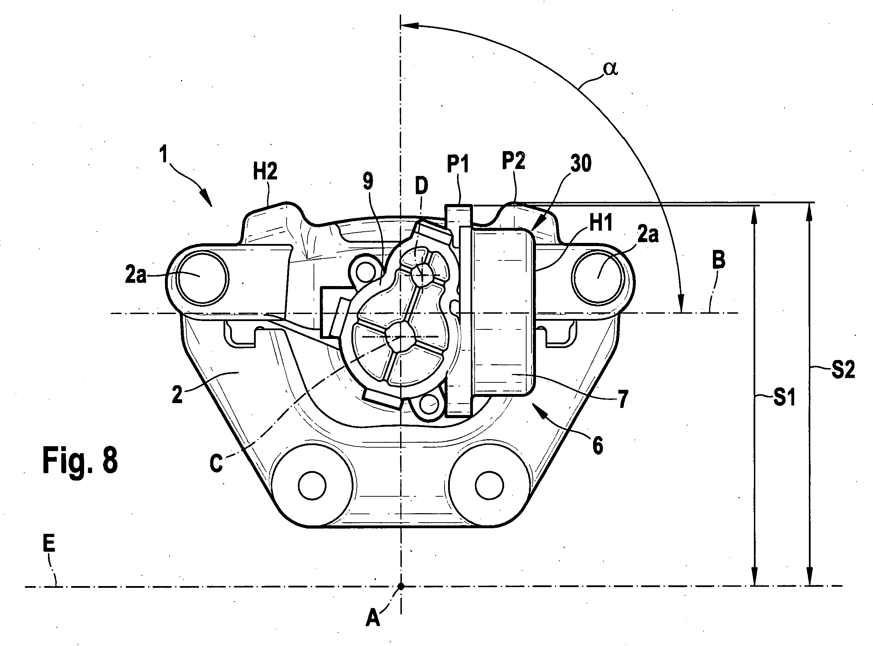

Nachfolgend wird unter Bezugnahme auf Figur 8 eine kombinierte Betriebs- und Feststellbremseinrichtung gemäß einem nicht zur Erfindung zählenden Ausführungsbeispiel beschrieben. Gleiche bzw. funktional gleiche Teile sind mit den gleichen Bezugszeichen wie in den vorhergehenden Ausführungsbeispielen bezeichnet.

Wie in Figur 8 gezeigt, ist im Unterschied zu den vorhergehenden Ausführungsbeispielen die Feststellbremseinrichtung 6 um die Spindelachse C um einen Winkel α von 90° im Uhrzeigersinn gedreht. In Figur 8 ist eine Hüllkurve H1 einer Motor-Getriebe-Einheit 30 eingezeichnet, welche aus dem Elektromotor 7, der Spindeleinrichtung und dem Getriebe 9 besteht. Ferner ist eine Hüllkurve H2 des Bremssattels 2 eingezeichnet. Wie aus Figur 8 ersichtlich ist, ist die Motor-Getriebe-Einheit 30 in einer Seitenansicht parallel zur Radachse A derart angeordnet, dass ein maximaler senkrechter Abstand S1 eines Punktes P1 der Hüllkurve H1 kleiner ist als ein maximaler senkrechter Abstand S2 eines Punktes P2 der Hüllkurve H2 des Bremssattels 2.

Dadurch ist sichergestellt, dass die Feststellbremseinrichtung 6 nicht über einen äußersten Punkt einer Hüllkurve H2 des Bremssattels 2 vorsteht. Dadurch kann verhindert werden, dass die Radbremseinrichtung 6 aufgrund von aufgewirbelten Steinen oder anderen aufgewirbelten Gegenständen beschädigt wird. Die Anordnung der Motor-Getriebe-Einheit 30 der Feststellbremseinrichtung 6 ist somit sehr kompakt, wobei vermieden wird, dass Teile der relativ empfindlichen Motor-Getriebe-Einheit 30 zu weit vor den Bremssattel 2 vorstehen. In dem in Figur 8 gezeigten nicht erfindungsgemäßen Ausführungsbeispiel liegt dabei die Achse B der Abtriebswelle des Elektromotors 7 parallel zur horizontalen Ebene E durch die Radachse A. Eine Verbindungslinie der Radachse A mit der Spindelachse C liegt ferner senkrecht zur Ebene E. Ferner ist die Anordnung der Feststellbremseinrichtung 6 derart, dass die Führungsbolzen 2a frei zugänglich liegen, ohne von der Feststellbremseinrichtung 6 überdeckt zu sein. Der senkrechte Abstand S1 des Punktes P1 der Hüllkurve H1 zur Ebene E ist dabei etwas geringer als der senkrechte Abstand S2 des Punktes P2 der Hüllkurve H2 des Bremssattels 2.

Ansonsten entspricht dieses Ausführungsbeispiel dem vorhergehenden Ausführungsbeispiel, so dass auf die dort gegebene Beschreibung verwiesen werden kann.

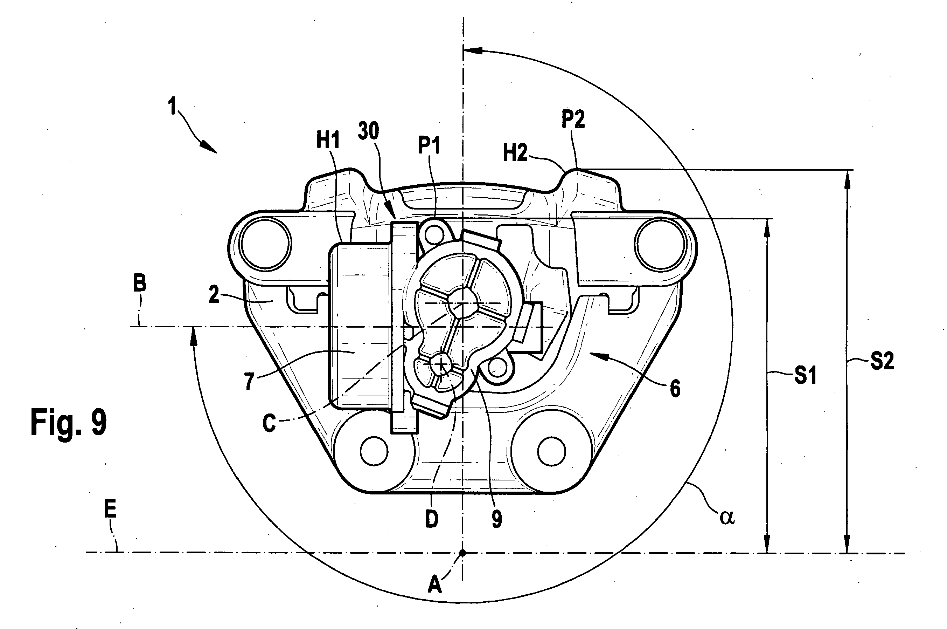

Nachfolgend wird unter Bezugnahme auf Figur 9 eine kombinierte Betriebs- und Feststellbremseinrichtung gemäß einem nicht zur Erfindung zählenden Ausführungsbeispiel beschrieben. Gleiche bzw. funktional gleiche Teile sind wieder mit den gleichen Bezugszeichen wie in den vorhergehenden Ausführungsbeispielen bezeichnet.

Das Ausführungsbeispiel entspricht im Wesentlichen dem zuvor beschriebenen Ausführungsbeispiel, wobei, wie in Figur 9 gezeigt, die Feststellbremseinrichtung 6 ausgehend von einer vertikalen Anordnung um einen Winkel α von 270° im Uhrzeigersinn um die Spindelachse C gedreht ist. Wie in Figur 9 gezeigt, ist hierbei die komplette Hüllkurve 1 der Motor-Getriebe-Einheit 30 der Feststellbremseinrichtung in der Hüllkurve H2 des Bremssattels 2 angeordnet. Dadurch wird ein besonders kompakter Aufbau realisiert. Auch in diesem Ausführungsbeispiel liegt die Achse B der Abtriebswelle des Elektromotors 7 parallel zu der Ebene E. Ansonsten entspricht dieses Ausführungsbeispiel dem zuvor beschriebenen Ausführungsbeispiel, so dass auf die dort gegebene Beschreibung verwiesen werden kann.

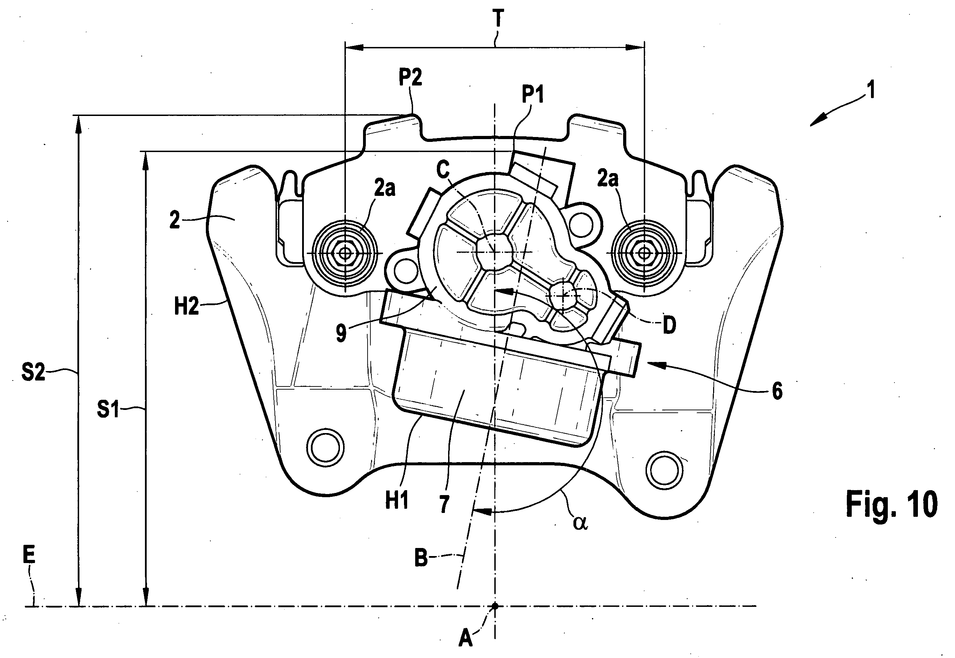

Figur 10 zeigt eine kombinierte Betriebs- und Feststellbremseinrichtung gemäß einem weiteren, nicht zur Erfindung zählenden Ausführungsbeispiel. Gleiche bzw. funktional gleiche Teile sind wieder mit den gleichen Bezugszeichen wie in den vorhergehenden Ausführungsbeispielen bezeichnet.

Dieses Ausführungsbeispiel ist ähnlich wie die zuvor beschriebenen beiden, nicht zur Erfindung zählenden Ausführungsbeispiele, wobei bei diesem Ausführungsbeispiel die Feststellbremseinheit 6 um einen Winkel α von 185° im Uhrzeigersinn, ausgehend von einer senkrechten Position der Achse B der Abtriebswelle des Elektromotors 7, geschwenkt ist. Somit liegt die Hüllkurve H1 der Motor-Getriebe-Einheit 30 vollständig in der Hüllkurve H2 des Bremssattels. Wie aus Figur 10 ersichtlich ist, ist durch diese Anordnung die Feststellbremseinrichtung 6 im Wesentlichen in radialer Richtung zur Radachse A angeordnet. Dadurch ist es möglich, dass die Sattelführungsbolzen 2a im Vergleich mit dem dritten und vierten Ausführungsbeispiel einen geringeren Abstand T aufweisen können. Der Abstand T entspricht ungefähr der maximalen Breite der Feststellbremseinrichtung 6.

Zu den in den Figuren 8 bis 10 gezeigten, nicht zur Erfindung zählenden Ausführungsbeispielen sei angemerkt, dass die Feststellbremseinrichtung 6 dabei ohne einen Steckeranschluss dargestellt ist. In den Figuren 8 bis 10 ist lediglich die Motor-Getriebe-Einheit 30 dargestellt, welche zusammen mit dem Steckeranschluss die gesamte Feststellbremseinrichtung 6 bildet. Je nach Fahrzeughersteller ist jedoch der Steckeranschluss unterschiedlich auszugestalten. Es sei jedoch angemerkt, dass ein Steckeranschluss an beliebigen Positionen an der Motor-Getriebe-Einheit 30 angeordnet werden kann, wobei darauf zu achten ist, dass die Hüllkurve der Motor-Getriebe-Einheit 30 mitsamt dem Steckeranschluss dann ebenfalls nicht über einen Punkt der Hüllkurve des Bremssattels 2 übersteht, welcher einen maximalen senkrechten Abstand S2 zur horizontalen Ebene E aufweist. Besonders bevorzugt wird ein Steckeranschluss ebenfalls so angeordnet, dass eine gemeinsame Hüllkurve für die Motor-Getriebe-Einheit 30 und den Steckeranschluss innerhalb der Hüllkurve H2 des Bremssattels 2 liegt.

## Patentansprüche

1. Kombinierte Betriebs- und Feststellbremseinrichtung für ein Fahrzeug, umfassend eine Radbremse mit einer Bremsscheibe (3), wenigstens einem Bremsbelag (4) und einem Bremskolben (5), wobei der Bremsbelag (4) an die Bremsscheibe (3) durch Aufbau eines Fluiddrucks am Bremskolben (5) anlegbar ist, und eine Feststellbremseinrichtung (6), welche einen Elektromotor (7) und eine Spindeleinrichtung mit einer Spindel (10) umfasst, wobei die Spindeleinrichtung in Wirkverbindung mit dem Bremskolben (5) ist, um einen Feststellbremswunsch auszuführen, wobei eine Spindelachse (C) der Spindel (10) parallel zu einer Radachse (A) des Fahrzeugs angeordnet ist, eine Abtriebswelle (8) des Elektromotors (7) senkrecht zur Radachse (A) angeordnet ist, wobei die Abtriebswelle (8) auf einer Geraden (B) zur Radachse (A) durch die Radachse (A) oder auf einer Parallelen (P) der Geraden (B) angeordnet ist und wobei ein Ende der Abtriebswelle (8) in Richtung der Radachse (A) gerichtet ist, **dadurch gekennzeichnet, dass** der Elektromotor (7) radial außen angeordnet ist.

2. Kombinierte Betriebs- und Feststellbremseinrichtung nach Anspruch 1, **dadurch gekennzeichnet, dass** zwischen der Abtriebswelle (8) und der Spindel (10) ein Getriebe (9, 19) angeordnet ist.

3. Kombinierte Betriebs- und Feststellbremseinrichtung nach Anspruch 2,
**dadurch gekennzeichnet, dass** das Getriebe (9,19) ein Schneckengetriebe umfasst.

4. Kombinierte Betriebs- und Feststellbremseinrichtung nach Anspruch 2, **dadurch gekennzeichnet, dass** das Getriebe (9, 19) ein Stirnradgetriebe umfasst.

5. Kombinierte Betriebs- und Feststellbremseinrichtung nach einem der Ansprüche 5, 2 bis 4, **dadurch gekennzeichnet, dass** das Getriebe (9) eine Schnecke (9a), ein Schneckenrad (9b), ein erstes Stirnzahnrad (9c) und ein zweites Stirnzahnrad (9d) umfasst, wobei die Schnecke (9a) an der Abtriebswelle (8) angeordnet ist und mit dem Schneckenrad (9b) kämmt, und das Schneckenrad (9b) und das erste Stirnrzahnad (9d) auf einer gemeinsamen Welle (16) angeordnet sind, und das erste Stirnzahnrad (9c) mit dem zweiten Stirnzahnrad (9d) kämmt, wobei das zweite Stirnzahnrad (9d) auf einer gemeinsamen Achse (C) mit der Spindel (10) angeordnet ist, um die Spindel anzutreiben.

6. Kombinierte Betriebs- und Feststellbremseinrichtung nach einem der Ansprüche 2 bis 4, **dadurch gekennzeichnet, dass** das Getriebe ein erstes Stirnzahnrad (19a), ein zweites Stirnzahnrad (19b), eine Schnecke (19c) und ein Schneckenrad (19d) umfasst, wobei das erste Stirnzahnrad (19a) an der Abtriebswelle (8) angeordnet ist und mit dem zweiten Stirnzahnrad (19b) kämmt, wobei das zweite Stirnzahnrad (19b) und die Schnecke (19c) auf einer gemeinsamen Welle (20) angeordnet sind und die Schnecke (19c) mit dem Schneckenrad (19d) kämmt, wobei das Schneckenrad (19d) auf einer gemeinsamen Achse (C) mit der Spindel (10) angeordnet ist, um die Spindel (10) anzutreiben.

7. Kombinierte Betriebs- und Feststellbremseinrichtung nach einem der vorhergehenden Ansprüche, **gekennzeichnet durch** einen Sensor (14) zur Erfassung einer Rotation der Abtriebswelle (8).

8. Kombinierte Betriebs- und Feststellbremseinrichtung nach Anspruch 7, **dadurch gekennzeichnet, dass** der Sensor (14) ein Hallsensor ist, welcher ein an einem Ende der Abtriebswelle (8) angeordnetes Hallsensor-Magnetrad (14a) und ein an einem Getriebegehäuse (13) angeordneten Hallsensor-Chip (14b) umfasst.

9. Kombinierte Betriebs- und Feststellbremseinrichtung nach Anspruch 7, **dadurch gekennzeichnet, dass** der Sensor ein Hallsensor ist, welcher zwischen dem Elektromotor (7) und einem Getriebezahnrad auf der Abtriebswelle (8) angeordnet ist.

10. Kombinierte Betriebs- und Feststellbremseinrichtung nach einem der vorhergehenden Ansprüche, **dadurch gekennzeichnet, dass** der Elektromotor (7) und das Getriebe (9, 19) als vormontierbare Baueinheit ausgebildet ist, welche mittels einer Kupplung (12a) an der Spindel (10) fixierbar und lösbar ist.

11. Kombinierte Betriebs- und Feststellbremseinrichtung nach einem der vorhergehenden Ansprüche, **dadurch gekennzeichnet, dass** ein Steckeranschluss (15) seitlich neben dem Elektromotor (7) angeordnet ist.

12. Kombinierte Betriebs- und Feststellbremseinrichtung nach einem der vorhergehenden Ansprüche, **dadurch gekennzeichnet, dass** die aus Elektromotor (7) und Getriebe (9, 19) vormontierte Baueinheit zwischen einem ersten Führungsbolzen (2a) und einem zweiten Führungsbolzen (2b) des Bremssattels (2) angeordnet ist, derart, dass der erste und zweite Führungsbolzen (2a, 2b) in axialer Richtung freiliegen.

13. Kombinierte Betriebs- und Feststellbremseinrichtung nach einem der vorhergehenden Ansprüche, **dadurch gekennzeichnet, dass** die Spindeleinrichtung selbsthemmend und/oder das Getriebe selbsthemmend ausgebildet ist.

## Claims

1. Combined service and parking brake device for a vehicle, comprising a wheel brake with a wheel disk (3), at least one brake lining (4) and a brake piston (5), wherein the brake lining (4) can be applied to the brake disk (3) by building up a fluid pressure at the brake piston (10), and a parking brake device (6) which comprises an electric motor (7) and a spindle device with a spindle (10), wherein the spindle device is operatively connected to the brake piston (5) in order to carry out a parking brake request, wherein a spindle axis (C) of the spindle (10) is arranged parallel to a wheel axis (A) of the vehicle, an output shaft (8) of the electric motor (7) is arranged perpendicularly with respect to the wheel axis (1), wherein the output shaft (8) is arranged on a straight line (B) with respect to the wheel axis (A) through the wheel axis (A) or on a line parallel (A) to the straight line (B) and wherein one end of the output shaft (8) is oriented in the direction of the wheel axis (A), **characterized in that** the electric motor (7) is arranged radially on the outside.

2. Combined service and parking brake device according to Claim 1, **characterized in that** a gearbox (9, 19) is arranged between the output shaft (8) and the spindle (10).

3. Combined service and parking brake device according to Claim 2, **characterized in that** the gearbox (9, 19) comprises a worm gear mechanism.

4. Combined service and parking brake device according to Claim 2, **characterized in that** the gearbox (9, 19) comprises a spur gear mechanism.

5. Combined service and parking brake device according to one of Claims 2 to 4, **characterized in that** the gear mechanism (9) comprises a worm (9a), a worm gear (9b), a first spur gear (9c) and a second spur gear (9d), wherein the worm (9a) is arranged on the output shaft (8) and meshes with the worm gear (9b), and the worm gear (9b) and the first spur gear (9d) are arranged on a common shaft (16), and the first spur gear (9c) meshes with the second spur gear (9d), wherein the second spur gear (9d) is arranged on a common axis (C) with the spindle (10) in order to drive the spindle.

6. Combined service and parking brake device according to one of Claims 2 to 4, **characterized in that** the gear mechanism comprises a first spur gear (19a), a second spur gear (19b), a worm (19c) and a worm gear (19d), wherein the first spur gear (19a) is arranged on the output shaft (8) and meshes with the second spur gear (19b), wherein the second spur gear (19b) and the worm (19c) are arranged on a common shaft (20), and the worm (19c) meshes with the worm gear (19d), wherein the worm gear (19d) is arranged on a common axis (C) with the spindle (10) in order to drive the spindle (10).

7. Combined service and parking brake device according to one of the preceding claims, **characterized by** a sensor (14) for sensing a rotation of the output shaft (8).

8. Combined service and parking brake device according to Claim 7, **characterized in that** the sensor (14) is a Hall sensor which comprises a Hall sensor magnet wheel (14a) which is arranged at one end of the output shaft (8), and a Hall sensor chip (14) which is arranged on a gearbox housing (13).

9. Combined service and parking brake device according to Claim 7, **characterized in that** the sensor is a Hall sensor which is arranged between the electric motor (7) and a gear wheel of the gearbox on the output shaft (8).

10. Combined service and parking brake device according to one of the preceding claims, **characterized in that** the electric motor (7) and the gearbox (9, 19) are embodied as a premountable structural unit which can be secured to the spindle (10) and released therefrom by means of a coupling (12a).

11. Combined service and parking brake device according to one of the preceding claims, **characterized in that** a plug connection (15) is arranged laterally next to the electric motor (7).

12. Combined service and parking brake device according to one of the preceding claims, **characterized in that** the structural unit which is pre-assembled from the electric motor (7) and gearbox (9, 19) is arranged between a first guide bolt (2a) and a second guide bolt (2b) of the brake calliper (2) in such a way that the first and second guide bolts (2a, 2b) are exposed in the axial direction.

13. Combined service and parking brake device according to one of the preceding claims, **characterized in that** the spindle device is embodied in a self-locking fashion and/or the gearbox is embodied in a self-locking fashion.

## Revendications

1. Dispositif de frein de service et de frein de stationnement combinés pour un véhicule, comprenant un frein de roue équipé d'un disque de frein (3), d'au moins une garniture de frein (4) et d'un piston de frein (5), la garniture de frein (4) pouvant être placée au niveau du disque de frein (3) en appliquant une pression fluide au niveau du piston de frein (5) et un dispositif de frein de stationnement (6) comprenant un moteur électrique (7) et un dispositif à vis avec une vis (10), le dispositif à vis étant en liaison active avec le piston de frein (5) pour mettre à exécution un souhait de frein de stationnement, un axe de vis (C) de la vis (10) étant disposé parallèlement à un essieu de roue (A) du véhicule, un arbre d'entraînement en sortie (8) du moteur électrique (7) étant disposé perpendiculairement à l'essieu de roue (A), l'arbre d'entraînement en sortie (8) étant disposé sur une droite (B) de l'essieu de roue (A) traversant l'essieu de roue (A) ou sur une parallèle (P) à la droite (B) et une extrémité de l'arbre d'entraînement en sortie (8) étant orientée en direction de l'essieu de roue (A), caractérisé en ce le moteur électrique (7) est disposé à l'extérieur dans le plan radial.

2. Dispositif de frein de service et de frein de stationnement combinés selon la revendication 1, **caractérisé en ce qu'**un engrenage (9, 19) est disposé entre l'arbre d'entraînement en sortie (8) et la vis (10).

3. Dispositif de frein de service et de frein de stationnement combinés selon la revendication 2, **caractérisé en ce que** l'engrenage (9, 19) comprend un engrenage par vis sans fin.

4. Dispositif de frein de service et de frein de stationnement combinés selon la revendication 2, **caractérisé en ce que** l'engrenage (9, 19) comprend un engrenage à roues droites.

5. Dispositif de frein de service et de frein de stationnement combinés selon l'une quelconque des revendications 2 à 4, **caractérisé en ce que** l'engrenage (9) comprend une vis sans fin (9a), une roue de vis sans fin (9b), une première roue dentée avant (9c) et une deuxième roue dentée avant (9d), la vis sans fin (9a) étant disposée au niveau de l'arbre d'entraînement en sortie (8) et s'engrenant avec la roue de vis sans fin (9b) et la roue de vis sans fin (9b) et la première roue dentée avant (9d) étant disposées sur un arbre (16) commun et la première roue dentée avant (9c) s'engrenant avec la deuxième roue dentée avant (9d), la deuxième roue dentée avant (9d) étant disposée sur un axe (C) commun à la vis (10), pour entraîner la vis.

6. Dispositif de frein de service et de frein de stationnement combinés selon l'une quelconque des revendications 2 à 4, **caractérisé en ce que** l'engrenage comprend une première roue dentée avant (19a), une deuxième roue dentée avant (19b), une vis sans fin (19c) et une roue de vis sans fin (19d), la première roue dentée avant (19a) étant disposée au niveau de l'arbre d'entraînement en sortie (8) et s'engrenant avec la deuxième roue dentée avant (19b), la deuxième roue dentée avant (19b) et la vis sans fin (19c) étant disposées sur un arbre (20) commun et la vis sans fin (19c) s'engrenant avec la roue de vis sans fin (19d), la roue de vis sans fin (19d) étant disposée sur un axe (C) commun à la vis (10), pour entraîner la vis (10).

7. Dispositif de frein de service et de frein de stationnement combinés selon l'une quelconque des revendications précédentes, **caractérisé par** un capteur (14) permettant de détecter une rotation de l'arbre d'entraînement en sortie (8).

8. Dispositif de frein de service et de frein de stationnement combinés selon la revendication 7, **caractérisé en ce que** le capteur (14) est un capteur de Hall comprenant une roue aimantée (14a) de capteur de Hall disposée à une extrémité de l'arbre d'entraînement en sortie (8) et une puce de capteur de Hall (14b) disposée au niveau d'un carter d'engrenage (13).

9. Dispositif de frein de service et de frein de stationnement combinés selon la revendication 7, **caractérisé en ce que** le capteur est un capteur de Hall disposé sur l'arbre d'entraînement en sortie (8) entre le moteur électrique (7) et une roue dentée d'engrenage.

10. Dispositif de frein de service et de frein de stationnement combinés selon l'une quelconque des revendications précédentes, **caractérisé en ce que** le moteur électrique (7) et l'engrenage (9, 19) prennent la forme d'une unité de construction prémontable pouvant être fixée à la vis (10) et détachée de celle-ci au moyen d'un couplage (12a).

11. Dispositif de frein de service et de frein de stationnement combinés selon l'une quelconque des revendications précédentes, **caractérisé en ce qu'**un raccord enfichable (15) est disposé en côté, à côté du moteur électrique (7).

12. Dispositif de frein de service et de frein de stationnement combinés selon l'une quelconque des revendications précédentes, **caractérisé en ce que** l'unité de construction prémontée composée du moteur électrique (7) et de l'engrenage (9, 19) est disposée entre un premier boulon de guidage (2a) et un deuxième boulon de guidage (2b) de l'étrier de frein (2), de telle sorte que le premier et le deuxième boulon de guidage (2a, 2b) reposent librement dans la direction axiale.

13. Dispositif de frein de service et de frein de stationnement combinés selon l'une quelconque des revendications précédentes, **caractérisé en ce que** le dispositif à vis et/ou l'engrenage sont pourvus d'un blocage automatique.
